# EUROPEAN PATENT APPLICATION

(11) **EP 1 666 344 A1**
(43) Date of publication of application: **07.06.2006**
(21) Application number: 05111541.8
(22) Date of filing: 01.12.2005
(51) Int. Cl.: B62D 31/00

(54) **Four-seat small-size motor vehicle**

(30) Priority: 02.12.2004 IT TO20040156 U
(71) Applicant: ITALDESIGN-GIUGIARO S.p.A, 10121 Torino (IT)
(72) Inventor: Mantovani, Aldo, I-10024, Moncalieri (Torino) (IT)
(74) Representative: Rondano, Davide

(57) **Abstract**

The motor vehicle (10) comprises: a body (12) enclosing a passenger compartment in which a pair of front seats (22), for the driver and a first passenger, respectively, and a pair of single-place rear seats (24), or a single two-place rear seat, for a second and a third passenger are arranged; a frame (14) comprising a middle portion (14b) which supports a middle floor (18) on which the front seats (22) are mounted and a rear portion (14c) which supports a rear floor (20) on which the single-place rear seats (24), or the single two-place rear seat, are mounted, wherein said rear floor (20) is placed at a higher level than the middle floor (18); a pair of steering front wheels (16) and a pair of driving rear wheels (28); and an internal combustion engine (26) mounted beneath the rear floor (20) close to the axis of the rear wheels (28) and arranged to operate the rear wheels (28).

## Description

The present invention refers to a four-seat small-size internal combustion engined vehicle belonging to the family of the so-called micro- or city-cars, that is, small-size motorcars (about three meters long) particularly suitable for urban transport.

Conventionally, the motorcars of the above-specified type are capable of accommodating two occupants at most (the driver and one possible passenger), due to the need to provide suitable space for receiving the propulsion unit (engine and transmission), the radiator, the tank, the battery and all the other devices and systems usually provided in a motor vehicle.

It is the object of the present invention to provide a motor vehicle which, in spite of a very reduced size, especially in length, is capable of accommodating comfortably on board four persons seating on two rows of seats arranged in the usual manner.

This and other objects are achieved according to the invention by a four-seat small-size motor vehicle having the characteristics defined in independent Claim 1. Further advantageous characteristics of the invention are defined in the dependent claims.

The characteristics and the advantages of the invention will become clear from the detailed description which follows, given purely by way of non-limiting example with reference to the appended drawings, in which:

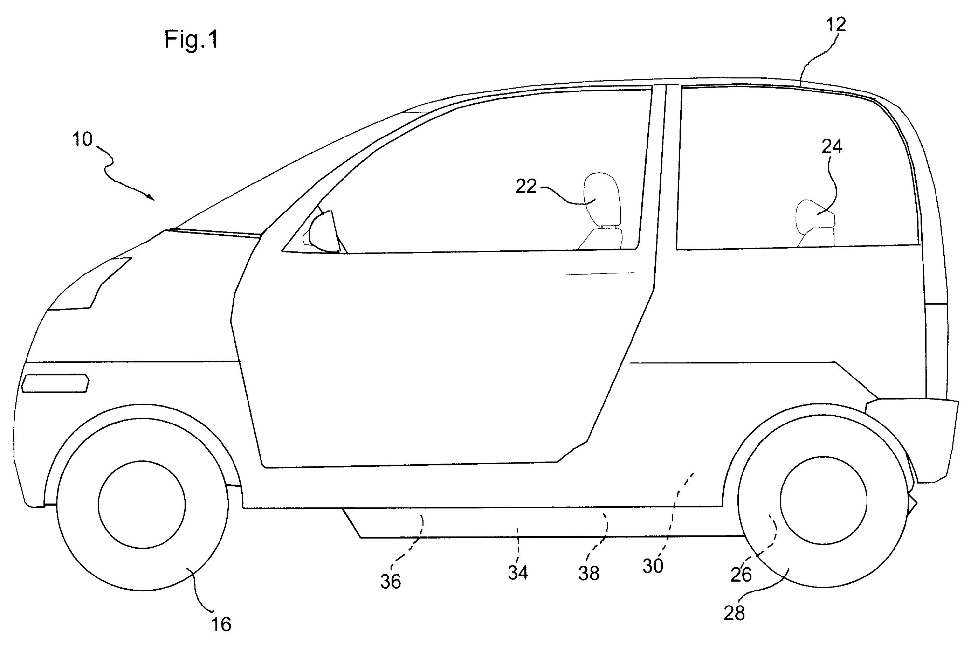

Figure 1 is a side elevation view of a four-seat small-size motor vehicle according to the present invention;
Figure 2 is a view similar to the one of Figure 1, which schematically illustrates the longitudinal arrangement of the seats and of the internal combustion engine of a four-seat small-size motor vehicle according to the invention; and
Figure 3 is a plan view from below of the motor vehicle of Figure 1.

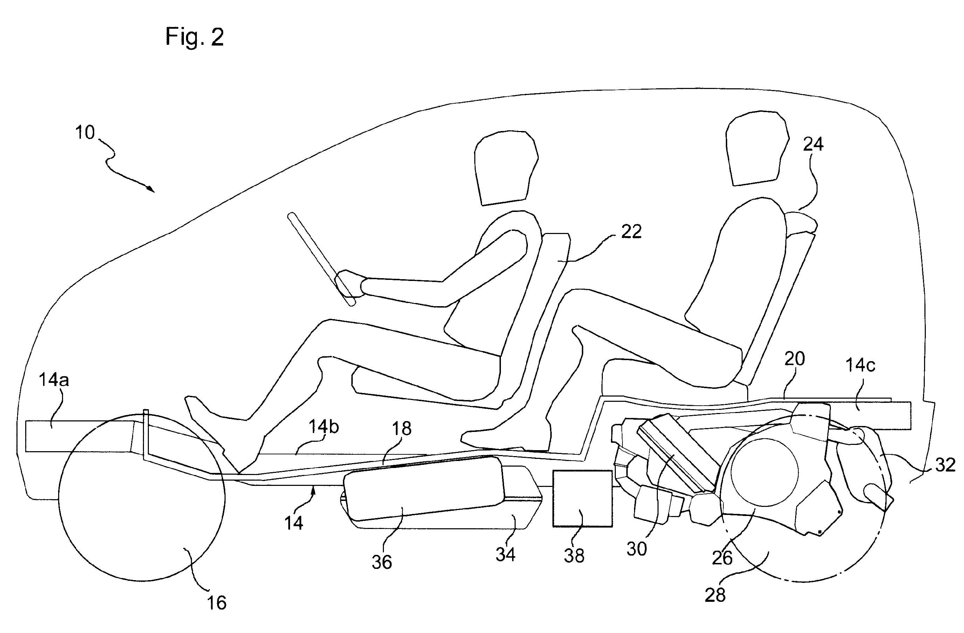

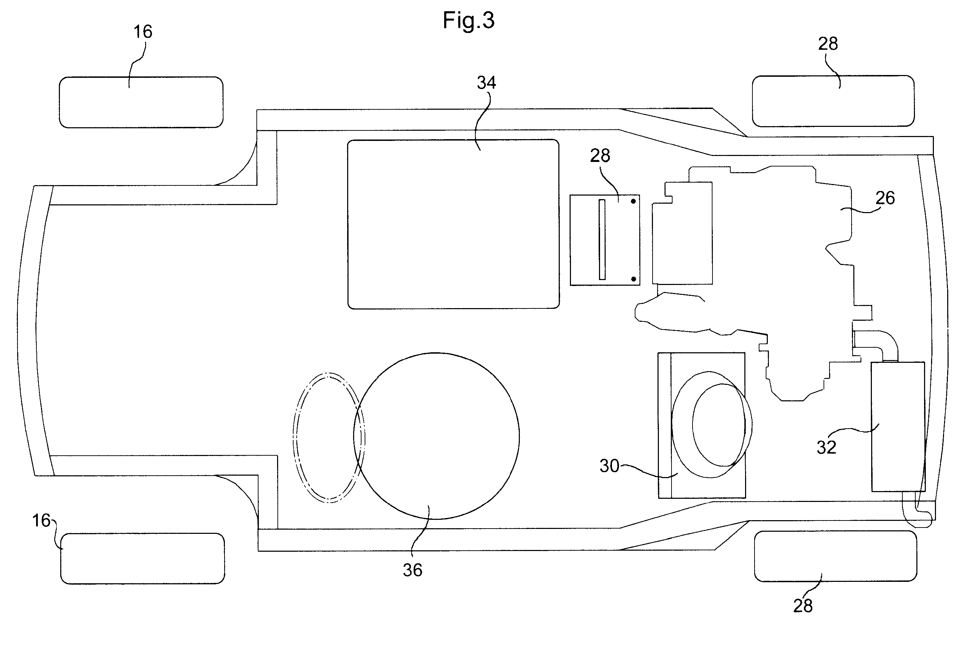

With reference to the figures, a four-seat small-size motor vehicle according to the invention is generally indicated 10 and comprises:
a bodywork 12, which is illustrated in the drawings in the three-door version, but which could also be a five-door one;
a frame 14 including a front portion 14a, to which the suspension and steering components (per-se-known and not illustrated) for the steering front wheels 16 are connected, a middle portion 14b supporting a middle floor 18 and a rear portion 14c supporting a rear floor 20 placed at a higher level than the middle floor 18;
a pair of front seats 22 (of which only the driver's seat is shown in Figure 2), mounted on the middle floor 18;
a pair of single-place rear seats 24 (of which only the lefthand seat is shown in Figure 2), or alternatively a single two-place rear seat, mounted on the rear floor 20;
an internal combustion engine 26, which is suitably configured and oriented (preferably in the transverse direction) so as to take the smallest space possible in the three directions, and is mounted beneath the rear floor 20 in front of and close to the axis of the driving rear wheels 28;
a radiator 30 and an exhaust muffler 32 (per-se-known) arranged beneath the rear floor 20 and in the vicinity of the engine 26 together with their respective conduits; and
a tank 34, a spare wheel 36, if any, and a battery 38 (also per-se-known) suitably arranged beneath the middle floor 18, as shown in the plan view of Figure 3.

All the other devices and systems normally provided on board of a motor vehicle (braking system, lighting system, steering system, transmission etc.) are per-se-known and will not therefore be described in detail.

According to a non-illustrated variant of embodiment, the steering front wheels 16 are also driving wheels, as they are each operated for example by a respective electric motor integrated in the wheel.

According to the invention, due to the engine being received beneath a raised rear portion of the vehicle floor, the length of the vehicle is therefore not increased. Moreover, due to a pair of single-place rear seats, or alternatively a single two-place rear seat, being arranged on that raised floor portion, sufficient space available for four persons can be ensured on board of the vehicle. For instance, despite a three meters overall length of the motor vehicle, the distance between the H points of the front and rear passengers can be up to about 0.8 meters. Furthermore, since the rear seats are placed at a higher level than the front ones, it is easier for the rear passengers to get on board.

Naturally, the principle of the invention remaining unchanged, embodiments and manufacturing details can be varied widely from those described and illustrated purely by way of non-limiting example.

## Claims

1. Four-seat small-size motor vehicle (10), comprising
- a body (12) enclosing a passenger compartment in which a pair of front seats (22), for the driver and for a first passenger, respectively, and a pair of single-place rear seats (24), or a single two-place rear seat, for a second and a third passenger are arranged;
- a frame (14) comprising a middle portion (14b) which supports a middle floor (18) on which the front seats (22) are mounted and a rear portion (14c) which supports a rear floor (20) on which the single-place rear seats (24), or the single two-place rear seat, are mounted, wherein said rear floor (20) is placed at a higher level than the middle floor (18) ;
- a pair of steering front wheels (16) and a pair of driving rear wheels (28); and
- an internal combustion engine (26) mounted beneath the rear floor (20) close to the axis of the rear wheels (28) and arranged to operate the rear wheels (28).

2. A motor vehicle according to Claim 1, wherein the internal combustion engine (26) is oriented transversely.

3. A motor vehicle according to Claim 1 or Claim 2, wherein the internal combustion engine (26) is arranged in front of the axis of the rear wheels (28).

4. A motor vehicle according to any of the preceding claims, wherein the front wheels (16) are driving wheels.

5. A motor vehicle according to any of the preceding claims, further comprising a radiator (30) and an exhaust muffler (32) arranged beneath the rear floor (20) and close to the engine (26).

6. A motor vehicle according to any of the preceding claims, further comprising a tank (34), a spare wheel (36) and a battery (38) arranged beneath the middle floor (18).
